# EUROPÄISCHE PATENTSCHRIFT

(11) **EP 2 298 607 B1**
(45) Veröffentlichungstag und Bekanntmachung des Hinweises auf die Patenterteilung: **07.08.2013**
(21) Anmeldenummer: 10006542.4
(22) Anmeldetag: 23.06.2010
(51) Int. Cl.: B60R 13/04, B60Q 1/32

(54) **Zierleiste für ein Kraftfahrzeug**
Decorative bar for a motor vehicle
Enjoliveur pour un véhicule automobile

(30) Priorität: 18.09.2009 DE 102009042112
(43) Veröffentlichungstag der Anmeldung: 23.03.2011
(73) Patentinhaber: DURA Automotive Body & Glass Systems GmbH, 58840 Plettenberg (DE)
(72) Erfinder: Vornbaeumen, Jens, Dipl.-Ing. (FH), 58762 Altena (DE); Winkhaus, Kai, Dipl.-Ing. (FH), 58849 Herscheid (DE)
(74) Vertreter: Zinnecker, Armin

(56) Entgegenhaltungen:
- DE-U1- 20 110 352
- JP-A- 1 197 143
- JP-U- 59 109 561
- JP-U- 62 074 055

## Beschreibung

Die Erfindung betrifft eine Zierleiste für ein Kraftfahrzeug.

Aus der DE 298 07 369 U1 ist eine Kraftfahrzeug-Zierleiste bekannt, die mehrteilig aufgebaut ist. Damit die zusammengefügte Stellung der Leistenteile ohne zusätzliche Mittel fixiert ist, besteht die Zierleiste aus zwei im Querschnitt U-förmig gestalteten Leistenteilen, die unter Übereinanderlage der U-Schenkel durch unmittelbare Verrastung gegeneinander gehaltert sind.

Die DE 202 07 098 U1 offenbart eine ähnliche Kraftfahrzeug-Zierleiste, die ebenfalls zur Einfassung von Fensterausschnitten dient und bei der die Leistenteile unter Übereinanderlage der U-Schenkel durch eine Einschubverbindung gegeneinander gehaltert sind.

Aus der DE 102 39 579 A1 ist ein Kraftfahrzeugzierelement bekannt, das einen Grundkörper umfaßt, der eine Zieroberfläche aufweist, in der eine Aufnahmeöffnung vorgesehen ist. In oder unter der Aufnahmeöffnung ist eine Beleuchtungseinheit mit einer transparenten Deckschicht, einer halbreflektierenden Funktionsschicht und einer Lichtquelle angeordnet.

Die DE 10 2006 049 872 A1 offenbart eine Zierleiste für ein Kraftfahrzeug, die mit einem Diffusor verbunden ist, der von einem Leuchtmittel beleuchtet wird.

Aus der DE 10 2008 027 128 A1 ist eine Zierleiste für ein Kraftfahrzeug bekannt, die einen Grundkörper aufweist, der bereichsweise von einem Verkleidungselement oder einer Abdeckschicht abgedeckt ist. Das Verkleidungselement oder die Abdeckschicht sind zumindest bereichsweise lumineszierend ausgebildet oder beleuchtet.

Aus der DE 601 33 217 T2 ist eine Seitenzierleiste für ein Kraftfahrzeug bekannt, an der eine Tastatur unter Verwendung eines Halteclips befestigt ist. Die Seitenzierleiste weist ein Abdeckteil auf, das eine Öffnung umfaßt, die mit der Tastatur zusammenwirkt.

Die DE 690 21 357 T2 offenbart einen anpaßbaren Dichtungsstreifen für ein Fahrzeug.

Aus der US 2004/0036234 A1 ist ein Dichtungsstreifen für eine Tür eines Kraftfahrzeugs bekannt.

Eine Zierleiste nach dem Oberbegriff des Anspruchs 1 ist aus der DE 201 10 352 U1 bekannt.

Die JP 59109561 U offenbart ein Bauteil, bei dem eine Leuchteinheit vorhanden ist.

Aufgabe der Erfindung ist es, eine verbesserte Zierleiste für ein Kraftfahrzeug vorzuschlagen.

Erfindungsgemäß wird diese Aufgabe durch die Merkmale des Anspruchs 1 gelöst. Die Zierleiste für ein Kraftfahrzeug umfaßt ein erstes Teilprofil und ein zweites Teilprofil, das mit dem ersten Teilprofil gefügt ist. Die Teilprofil umschließen einen Aufnahmeraum für eine innere Einheit. Der Aufnahmeraum für die innere Einheit weist eine Öffnung nach außen auf. Vorteilhaft ist es, wenn die Teilprofile den Aufnahmeraum für die innere Einheit teilweise umschließen. Die Teilprofile können den Aufnahmeraum unter Bildung einer Öffnung nach außen teilweise umschließen.

Die erfindungsgemäße Zierleiste ist insbesondere als Außenzierleiste geeignet. Sie kann insbesondere als Schachtzierleiste verwendet werden, also als Zierleiste zur Einfassung eines Fensterausschnitts eines Kraftfahrzeugs. Das Fenster kann sich in der Karosserie des Kraftfahrzeugs befinden. Es kann sich allerdings auch in einer Türe oder Klappe eines Kraftfahrzeugs befinden. Die erfindungsgemäße Zierleiste kann sowohl für feststehende Fenster als auch für bewegliche Fenster verwendet werden. Sie ist insbesondere als Zierleiste für die sogenannte Brüstung eines Kraftfahrzeug-Fensters geeignet.

Im eingebauten Zustand kann das erste Teilprofil das obere Profil sein. Das zweite Teilprofil kann das untere Profil sein. Vorteilhaft ist es, wenn jedes Teilprofil im eingebauten Zustand eine Sichtfläche nach außen hat.

Die Teilprofile sind als Aluminium-Strangpreßprofile oder Aluminium-Rollprofile ausgebildet oder als Strangpreßprofile oder Rollprofile aus anderen Werkstoffen, insbesondere Metallen, hergestellt oder als Kunststoffextrudat ausgebildet. Als Kunststoff kann insbesondere PMMA verwendet werden. Die Teilprofile können jeweils aus demselben Werkstoff hergestellt sein. Es ist allerdings auch möglich, verschiedene Werkstoffe für die Teilprofile zu verwenden. Insbesondere kann für ein Teilprofil ein Aluminium-Strangpreßprofil oder Aluminium-Rollprofil verwendet werden und für das andere Teilprofil ein Kunststoffextrudat.

Die Teilprofile können gerade sein. Sie können allerdings auch einen Radius, insbesondere einen kontinuierlichen oder einen diskontinuierlichen Radius aufweisen. Ferner können die Teilprofile kurvenförmig gebogen sein. Die Biegungen der Teilprofile sind vorzugsweise aufeinander abgestimmt.

Die Teilprofile können dieselbe Oberfläche aufweisen. Sie können allerdings auch unterschiedliche Oberflächen aufweisen.

Die Öffnung des Aufnahmeraums ist durchlaufend ausgebildet. Dadurch kann sich ein vorteilhaftes Erscheinungsbild ergeben. In der durchlaufenden Öffnung kann ein Teil der inneren Einheit sichtbar sein. Die durchlaufende Ausbildung der Öffnung ermöglicht es, daß die innere Einheit über die gesamte Länge des Fensters sichtbar ist, so daß ein durchlaufendes Erscheinungsbild des Fensters und der Zierleiste entsteht. Die Öffnung kann über ihre gesamte Länge dieselbe Breite aufweisen. Es ist allerdings auch möglich, die Breite der Öffnung über ihre Länge gleichmäßig ansteigend oder keilförmig oder wellenförmig oder mit einer sonstigen Kontur auszugestalten.

Vorteilhafte Weiterbildungen sind in den Unteransprüchen beschrieben.

Eine vorteilhafte Weiterbildung ist **dadurch gekennzeichnet, daß** die Fügestelle der Teilprofile an derjenigen Seite der Zierleiste liegt, die der Öffnung gegenüberliegt. Diese Fügestelle kann dann durch die innere Einheit abgedeckt werden, so daß sie von außen nicht sichtbar ist.

Die innere Einheit kann eine Leuchteinheit sein. Die Leuchteinheit kann einen längsförmigen Lichtleiter umfassen, der durch mindestens eine LED gespeist wird und/oder der mit einer Elektrolumineszenzfolie bestückt ist. Es ist allerdings auch möglich, daß die innere Einheit als stabförmiges Element ausgebildet ist, insbesondere als farbiges stabförmiges Element.

Stattdessen oder zusätzlich kann die innere Einheit eines oder mehrere Sensorelemente umfassen und/oder als Sensorelement ausgebildet sein. Als Sensorelemente können Sensoren verschiedenster Art verwendet werden, insbesondere elektromagnetische Sensoren, optische Sensoren, Ultraschallsensoren, Berührungssensoren und/oder Wärmesensoren. Es kann sich um Sensorelemente zur Fahrerunterstützung handeln wie beispielsweise Sensoren zur Minimierung des toten Winkels und/oder Abstandssensoren für die Öffnung von Türen, insbesondere bei Schiebetüren.

Vorteilhaft ist es, wenn die innere Einheit ein Gehäuse umfaßt. Das Gehäuse kann mit einem oder beiden Teilprofilen verbunden sein.

Nach einer weiteren vorteilhaften Weiterbildung weist die innere Einheit ein Außenelement mit einem Sichtbereich auf, der die Öffnung des Aufnahmeraums ausfüllt. Die Ausgestaltung kann insbesondere derart getroffen werden, daß von außen nur die beiden Teilprofile und der Sichtbereich des Außenelements sichtbar sind.

Eine weitere vorteilhafte Weiterbildung ist gekennzeichnet durch eine Endkappe, die mit einem oder beiden Teilprofilen verbindbar oder verbunden ist und die eine in die Öffnung des Aufnahmeraums ragende Lasche aufweist. Die Lasche ist vorzugsweise derart ausgestaltet, daß sie die innere Einheit, die sich in dem Aufnahmeraum zwischen den Teilprofilen befindet, teilweise abdeckt. Dadurch kann das äußere Erscheinungsbild an den Enden der Zierleiste verbessert werden. Ferner können dadurch unterschiedliche Wärmedehnungen der Teilprofile einerseits und der inneren Einheit andererseits kompensiert werden.

Eines oder beide Teilprofile können ein abgekröpftes Ende aufweisen. Hierdurch kann das optische Erscheinungsbild des Endes der Zierleiste verbessert werden.

Ein Tragprofil, insbesondere das untere Tragprofil, kann eine Entwässerungsöffnung aufweisen.

Ein Ausführungsbeispiel der Erfindung wird nachstehend anhand der beigefügten Zeichnung im einzelnen erläutert. In der Zeichnung zeigt
- Fig. 1: ein Kraftfahrzeug mit Schachtzierleisten in einer schematischen Seitenansicht,
- Fig. 2: eine Zierleiste gemäß Fig. 1 in einem Querschnitt,
- Fig. 3: die Zierleiste gemäß Fig. 2 im nicht eingebauten Zustand,
- Fig. 4: das vordere Ende der Zierleiste gemäß Fig. 2 und 3 in einer Sei- tenansicht,
- Fig. 5: das vordere Ende der Zierleiste gemäß Fig. 2, 3 und 4 in einem Längsschnitt und
- Fig. 6: das hintere Ende der Zierleiste gemäß Fig. 2, 3, 4 und 5 in einer Seitenansicht.

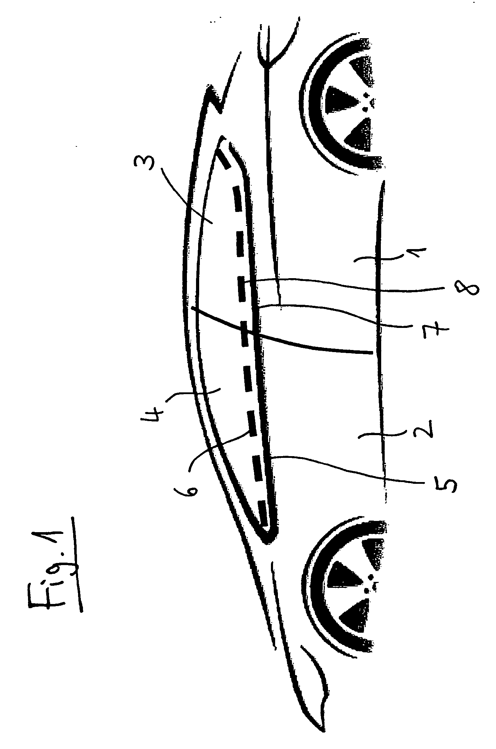

Das in Fig. 1 in einer Seitenansicht gezeigte Kraftfahrzeug umfaßt eine Karosserie 1 und eine Türe 2. In der Karosserie 1 ist ein festes Fenster 3 vorgesehen. Das Fenster 4 in der Türe 2 ist beweglich. Im Bereich der Brüstung 5 des Fensters 4 wird der Übergangsbereich zwischen der Brüstung 5 und dem Fenster 4 durch eine Zierleiste 6 abgedeckt. Im Bereich der Brüstung 7 des Fensters 3 ist eine weitere Zierleiste 8 vorhanden, die ebenfalls den Übergangsbereich zwischen der Brüstung 7 und dem Fenster 3 abdeckt. Die Zierleisten 6, 8 können denselben Aufbau und denselben Querschnitt aufweisen.

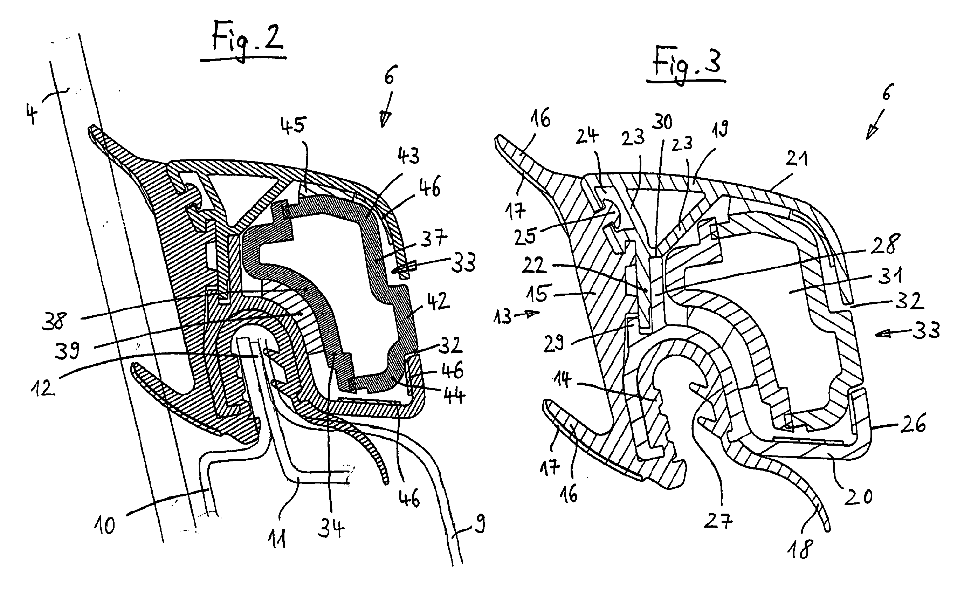

Fig. 2 und 3 zeigen einen Querschnitt durch die Zierleiste 6 der Fig. 1. Die Zierleiste 6 ist am oberen Ende der Türe 2 befestigt. Die Türe 2 umfaßt ein äußeres Türblech 9, ein inneres Türblech 10 und ein mittleres Türblech 11, deren obere Endabschnitte, die parallel zueinander verlaufen und aneinander anliegen, eine obere Endleiste 12 bilden.

Auf die obere Endleiste 12 der Kraftfahrzeugtüre 2 ist eine Profildichtung 13 aufgesteckt. Die Profildichtung 13 umfaßt einen U-förmigen Abschnitt 14, der die obere Endleiste 12 einfaßt. Um einen festen Sitz der Profildichtung 13 auf der oberen Endleiste 12 zu gewährleisten sind im Inneren des U-förmigen Abschnitts 14 nach innen weisende Widerhakenelemente vorhanden. Die Profildichtung 13 umfaßt ferner einen Fensterabschnitt 15, der sich vom inneren Schenkel des U-förmigen Abschnitts 14 parallel zum Fenster 4 nach oben erstreckt und an dem zwei Dichtungslaschen 16 angeformt sind, die sich jeweils schräg nach innen und oben erstrecken. Die Dichtungslaschen 16 liegen an dem beweglichen Fenster 4 an. Sie weisen an ihren dem Fenster 4 zugewandten Flächen Beschichtungen 17 auf, beispielsweise Flockbeschichtungen oder Gleitlackbeschichtungen. Die Profildichtung 13 weist ferner eine äußere Dichtungslasche 18 auf, die sich vom unteren Ende des äußeren Schenkels des U-förmigen Abschnitts 14 nach außen und unten erstreckt und die an der Außenseite des äußeren Türblechs 9 anliegt.

An der Profildichtung 13 ist die Zierleiste 6 befestigt. Die Zierleiste 6 umfaßt ein erstes, oberes Teilprofil 19 und ein zweites, unteres Teilprofil 20, das mit dem ersten Teilprofil 19 gefügt ist.

Das obere Teilprofil 19 umfaßt eine Sichtfläche 21 und einen vertikalen Befestigungsflansch 22, der über Verstrebungen 23 mit der Sichtfläche 21 verbunden ist. Die Sichtfläche 21 umfaßt einen äußeren, im wesentlichen vertikalen Abschnitt und einen inneren, im wesentlichen horizontalen Abschnitt, der mit dem vertikalen Abschnitt durch einen abgerundeten Abschnitt verbunden ist. Innerhalb der inneren Verstrebung 23 ist an dem oberen Teilprofil 19 ein Befestigungshohlraum 24 vorgesehen, der eine nach innen gerichtete Öffnung aufweist, in der ein mit einem pilzförmigen Kopf versehener Stift 25 verrastet werden kann, der an dem Fensterabschnitt 15 der Profildichtung 13 vorgesehen ist. Auf diese Weise kann das obere Teilprofil 19 mit der Profildichtung 13 lösbar verbunden werden.

Das untere Teilprofil 20 umfaßt eine Sichtfläche 26, einen U-förmigen Abschnitt 27 und einen vertikalen Befestigungsflansch 28. Die Sichtfläche 26 umfaßt einen äußeren, vertikalen Abschnitt und einen inneren, horizontalen Abschnitt, der mit dem vertikalen Abschnitt durch einen abgerundeten Abschnitt verbunden ist. Der vertikale Abschnitt der Sichtfläche 21 fluchtet mit dem vertikalen Abschnitt der Sichtfläche 26. Der U-förmige Abschnitt 27 schließt sich innen an den horizontalen Abschnitt der Sichtfläche 26 an. Er übergreift den U-förmigen Abschnitt 14 der Profildichtung 13 und liegt an diesem an.

Der vertikale Befestigungsflansch 28 schließt sich an die Basis des U-förmigen Abschnitts 27 an. Ferner ist im Bereich der Basis des U-förmigen Abschnitts 27 ein Widerlager 29 angeformt, das innerhalb des vertikalen Befestigungsflansches 28 liegt. Das Ende des vertikalen Befestigungsflansches 22 des oberen Teilprofils 19 kann in die Vertiefung zwischen dem vertikalen Befestigungsflansch 28 des unteren Teilprofils 20 und dem Widerlager 29 eingeschoben werden; es wird dort festgehalten. Das Ende des vertikalen Befestigungsflansches 28 des unteren Teilprofils 20 liegt an einem Absatz 30 des oberen Teilprofils 19 an, der sich neben dem Fußpunkt des vertikalen Befestigungsflansches 22 des oberen Teilprofils 19 befindet. Die Befestigungsflansche 22, 28 liegen aneinander an. Sie können miteinander verbunden sein. Dabei kann es sich um eine lösbare oder um eine unlösbare Verbindung handeln. Vorteilhaft ist eine Rastverbindung. Die Befestigungsflansche 22, 28 sind insbesondere durch Schrauben, Nieten oder Kleben miteinander verbunden.

Die Teilprofile 19, 20 umschließen einen Aufnahmeraum 31, der eine Öffnung 32 nach außen aufweist. Im Ausführungsbeispiel wird der Aufnahmeraum durch die äußere Verstrebung 23, die Sichtfläche 21, die Sichtfläche 26, einen Teil des U-förmigen Abschnitts 27 und den vertikalen Befestigungsflansch 28 umgrenzt. Die Öffnung 32 wird durch den Abstand der vertikalen Teile der Sichtflächen 21, 26 voneinander gebildet. Die Öffnung 32 ist durchlaufend ausgebildet. Sie erstreckt sich über die gesamte Länge der Zierleiste 6. Die Fügestelle der Teilprofile 19, 20, die sich im Bereich der vertikalen Befestigungsflansche 22, 28 befindet, liegt an der der Öffnung 32 gegenüberliegenden Seite der Zierleiste 6.

In dem Aufnahmeraum 31 der Zierleiste 6 ist eine innere Einheit 33 angeordnet. Die innere Einheit 33 umfaßt ein Gehäuse 34 und ein Außenelement 37. Die innere Einheit kann ferner eine Leiterplatte, eine Leuchteinheit und/oder eine elektrische Verbindungsstelle umfassen (in der Zeichnung nicht dargestellt). Die Leiterplatte, die Leuchteinheit und/oder die elektrische Verbindungsstelle und/oder weitere Bestandteile der inneren Einheit 33 können innerhalb der inneren Einheit 33 vorgesehen sein.

Das Gehäuse 34 weist einen gekrümmten Abschnitt 38 auf, der parallel zu dem U-förmigen Abschnitt 27 des unteren Teilprofils 20 und im Abstand zu diesem verläuft. An dem U-förmigen Abschnitt 27 ist ein Zwischenstück 39 befestigt, dessen Außenseite an der konkav gekrümmten Außenseite des gekrümmten Abschnitts 38 des Gehäuses 34 gleitend anliegt, um auf diese Weise unterschiedliche Wärmedehnungen des unteren Teilprofils 20 und des Gehäuses 34 auszugleichen. Das Zwischenstück 39 kann ein doppelseitiges Klebeband sein. Die Leuchteinheit, die in dem Gehäuse 34 vorhanden sein kann, kann als längsförmiger Lichtleiter ausgebildet sein. Sie kann leistenförmig ausgebildet sein. Sie kann sich im Inneren des Gehäuses 34 von unten nach oben erstrecken. Die Leuchteinheit liegt im Bereich der Öffnung 32.

Das Außenelement 37 umfaßt einen Sichtbereich 42, der die Öffnung 32 ausfüllt. Die äußere Oberfläche des Sichtbereichs 42 fluchtet mit den angrenzenden vertikalen Abschnitten der Sichtflächen 21, 26. Die Breite des Sichtbereichs 42 ist geringfügig kleiner als die Breite der Öffnung 32. An den Sichtbereich 42 schließt sich ein oberer Ausläufer 43 und ein unterer Ausläufer 44 an. Der obere Ausläufer 43 des Außenelements 37 ist gegenüber dem Sichtbereich 42 durch eine Stufe nach innen versetzt und verläuft etwa viertelkreisförmig zum oberen Ende des Gehäuses 34, an dem er befestigt ist. Er folgt in seinem Querschnitt in etwa der Sichtfläche 21. An der Innenseite des horizontalen Abschnitts der Sichtfläche 21 ist ein Zwischenstück 45 befestigt, dessen untere Endfläche an der oberen Außenfläche des oberen Ausläufers 43 gleitend anliegt, um auf diese Weise unterschiedliche Wärmedehnungen der Sichtfläche 21 und des Außenelements 37 auszugleichen. Der untere Ausläufer 44 des Außenelements 37 ist ebenfalls von dem Sichtbereich 42 nach innen abgesetzt und verläuft zum unteren Ende des Gehäuses 34, an dem er befestigt ist. Er folgt in etwa der Kontur der Sichtfläche 26. An der Innenseite des abgerundeten Abschnitts der Sichtfläche 21, des vertikalen Abschnitts der Sichtfläche 26 und des horizontalen Abschnitts der Sichtfläche 26 sind jeweils Profilbänder 46 befestigt, die teilweise gleitend an dem Außenelement 37 anliegen. Die Profilbänder 46 können geräuschdämpfend und/oder geräuschverhindernd wirken.

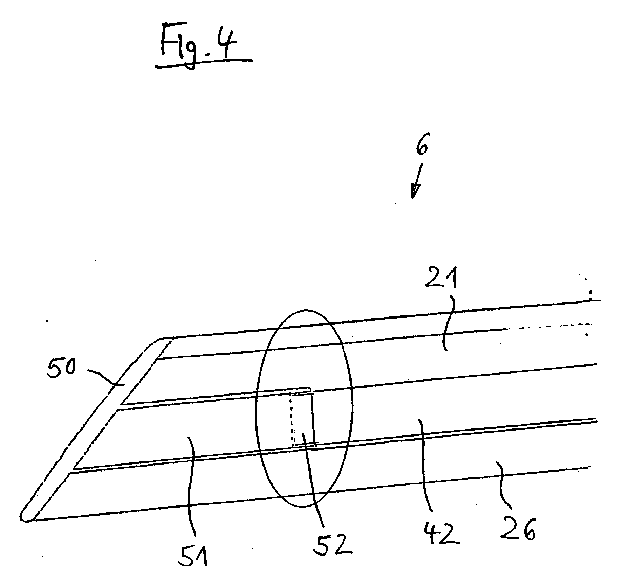

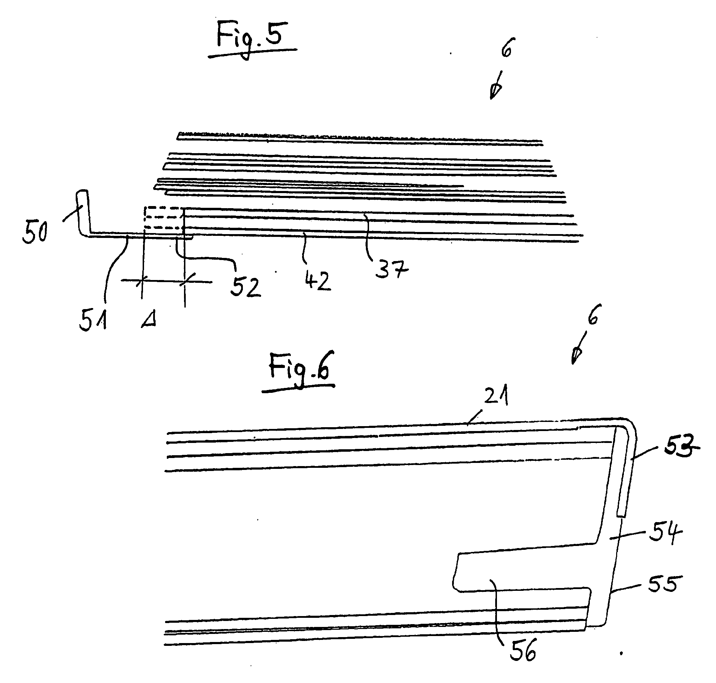

Das vordere Ende der Zierleiste 6 ist in Fig. 4 und 5 gezeigt. Dieses Ende ist durch eine Endkappe 50 verschlossen. Die Endkappe 50 ist mit dem oberen Teilprofil 19 und dem unteren Teilprofil 20 verbunden. Sie weist eine in die Öffnung 32 ragende Lasche 51 auf. Das Ende 52 der Lasche 51 überdeckt das Ende des Sichtbereichs 42 der inneren Einheit 33, wie insbesondere aus Fig. 4 und 5 ersichtlich. In Fig. 5 sind verschiedene Wärmedehnungen der inneren Einheit 33 einschließlich des Außenelements 37 einerseits und der Teilprofile 19, 20 andererseits dargestellt. Das durchgezogen gezeichnete Ende des Außenelements 37 und des Sichtbereichs 42 weist den größtmöglichen Abstand vom Ende der Teilprofile 19, 20 auf. Das gestrichelt gezeichnete Ende zeigt den geringsten Unterschied der Wärmedehnungen. Die Länge der Lasche 51 ist derart bemessen, daß sie auch bei der größtmöglichen Bauteildehnung (die durch eine Wärmebeaufschlagung hervorgerufen sein kann) noch das Ende des Außenelements 37 bzw. des Sichtbereichs 42 überdeckt.

Fig. 6 zeigt das hintere Ende der Zierleiste 6. Dort weist das obere Teilprofil 19 ein abgekröpftes Ende 53 auf. Mit dem unteren Teilprofil 20 ist eine Endkappe 54 verbunden. Die innere Einheit 33 ist im Bereich des hinteren Endes der Zierleiste 6 mit den Teilprofilen 19, 20 verbunden, so daß dort auch bei unterschiedlichen Bauteildehnungen (die durch Wärmebeaufschlagung hervorgerufen sein können) kein Abstand zwischen den Teilprofilen 19, 20 und der inneren Einheit 33 entstehen kann.

Die Kröpfung 53 übergreift den oberen Bereich der Endkappe 54, wie aus Fig. 6 ersichtlich. Zu diesem Zweck hat die Endkappe 54 in ihrem oberen äußeren Bereich eine Vertiefung, in der die Kröpfung 53 zu liegen kommt. Die Tiefe dieser Vertiefung ist etwas geringer als die Stärke der Kröpfung 53, so daß die Außenfläche der Kröpfung 53 gegenüber der Außenfläche 55 der Endkappe 54 vorsteht. Hierdurch wird eine bewußt sichtbare Trennkante zwischen dem unteren Ende der Kröpfung 53 und der Außenfläche 55 der Endkappe 54 gebildet. Der Überstand der Außenfläche der Kröpfung 53 über der Außenfläche 55 der Endkappe 54 dient ferner als Tropfkante für Wasser, insbesondere Regenwasser oder Waschwasser.

Die Endkappe 54 weist eine Lasche 56 auf, die in die Öffnung 32 zwischen den Teilprofilen 19, 20 ragt.

In dem vertikalen Abschnitt des unteren Teilprofils 20 ist eine Entwässerungsöffnung vorgesehen (in der Zeichnung nicht dargestellt). Die Entwässerungsöffnung befindet sich in der Mitte des unteren Teilprofils 20. Das untere Teilprofil 20 ist in Längsrichtung beidseits geneigt ausgestaltet, wobei sich die Entwässerungsöffnung an der tiefsten Stelle befindet.

Das obere Teilprofil kann eine Endkappe oder ein gekröpftes Ende aufweisen. Vorteilhaft ist ein gekröpftes Ende, wodurch das Erscheinungsbild wertiger wird. Das untere Teilprofil wird mit Endkappen verschlossen. Die Endkappen an dem unteren Teilprofil gleichen die Toleranzen der oberen und unteren Teilprofile in Z-Richtung durch Bildung eine Schattenfuge aus. Diese Toleranzen können insbesondere durch die Fertigung entstehen und/oder durch unterschiedliche Wärmeausdehnungskoeffizienten, insbesondere von Aluminium einerseits und Kunststoff andererseits. Ferner können die Endkappen die Materialausdehnungen der verschiedenen Werkstoffe der Teilprofile in Längsrichtung aufnehmen. Das untere Teilprofil kann durch die unteren Endkappen entwässert werden. Stattdessen oder zusätzlich kann es durch mindestens eine Entwässerungsöffnung in dem unteren Teilprofil entwässert werden; dies ist allerdings abhängig von der Einbaulage am Kraftfahrzeug.

## Patentansprüche

1. Zierleiste für ein Kraftfahrzeug mit einem ersten Teilprofil (19) und einem mit diesem gefügten zweiten Teilprofil (20), die einen Aufnahmeraum (31) für eine innere Einheit (33) umschließen, der eine Öffnung (32) nach außen aufweist,
**dadurch gekennzeichnet,**
**daß** die Teilprofile (19, 20) als Strangpreßprofile oder als Rollprofile oder als Kunststoffextrudat hergestellt sind und daß die Öffnung (32) durchlaufend ausgebildet ist.

2. Zierleiste nach Anspruch 1, **dadurch gekennzeichnet, daß** die Fügestelle der Teilprofile (19, 20) an der der Öffnung (32) gegenüberliegenden Seite der Zierleiste (6) liegt.

3. Zierleiste nach einem der vorhergehenden Ansprüche, **dadurch gekennzeichnet, daß** die innere Einheit (33) eine Leuchteinheit und/oder ein Dekorelement umfaßt.

4. Zierleiste nach einem der vorhergehenden Ansprüche, **dadurch gekennzeichnet, daß** die innere Einheit (33) eines oder mehrere Sensorelemente umfaßt.

5. Zierleiste nach einem der vorhergehenden Ansprüche, **dadurch gekennzeichnet, daß** die innere Einheit (33) ein Gehäuse (34) umfaßt.

6. Zierleiste nach einem der vorhergehenden Ansprüche, **dadurch gekennzeichnet, daß** die innere Einheit (33) ein Außenelement (37) mit einem die Öffnung (32) ausfüllenden Sichtbereich (42) aufweist.

7. Zierleiste nach einem der vorhergehenden Ansprüche, **gekennzeichnet durch** eine Endkappe (50), die mit einem oder beiden Teilprofilen (19, 20) verbunden ist und die eine in die Öffnung (32) ragende Lasche (51) aufweist.

8. Zierleiste nach einem der vorhergehenden Ansprüche, **dadurch gekennzeichnet, daß** eines oder beide Teilprofile (19, 20) ein abgekröpftes Ende (53) aufweisen.

9. Zierleiste nach einem der vorhergehenden Ansprüche, **dadurch gekennzeichnet, daß** ein Tragprofil eine Entwässerungsöffnung aufweist.

## Claims

1. Decorative bar for a motor vehicle, having a first part profile (19) and second part profile (20) joined to this, which enclose a receiving space (31) for an internal unit (33), said receiving space having an outward opening (32),
**characterised in that**,
the part profiles (19, 20) are produced as extruded profiles or as rolled profiles or as plastic extrudate, and **in that** the opening (32) is designed to be continuous.

2. Decorative bar according to claim 1, **characterised in that** the joining point of the part profiles (19, 20) is located on the side of the decorative bar (6) that is opposite the opening (32).

3. Decorative bar according to one of the preceding claims, **characterised in that** the internal unit (33) comprises a lighting unit and/or a decorative element.

4. Decorative bar according to one of the preceding claims, **characterised in that** the internal unit (33) comprises one or more sensor elements.

5. Decorative bar according to one of the preceding claims, **characterised in that** the internal unit (33) comprises a housing (34).

6. Decorative bar according to one of the preceding claims, **characterised in that** the internal unit (33) comprises an external element (37) with a visible region (42) that fills the opening (32).

7. Decorative bar according to one of the preceding claims, **characterised by** an end cap (50) that is connected to one or both part profiles (19, 20) and that has a flap (51) protruding into the opening (32).

8. Decorative bar according to one of the preceding claims, **characterised in that** one or both part profiles (19, 20) have an offset end (53).

9. Decorative bar according to one of the preceding claims, **characterised in that** a support profile has a drainage opening.

## Revendications

1. Enjoliveur pour un véhicule automobile, avec un premier profilé partiel (19) et avec un second profilé partiel (20) joint au premier, lequel enjoliveur comportant un cadre (31) pour recevoir une unité interne (33), le cadre comportant une ouverture (32) orientée vers l'extérieur,
**caractérisé en ce que** les profilés partiels (19, 20) sont des profilés extrudés, des profilés roulés ou des profilés en matière plastique extrudée et **en ce que** l'ouverture (32) est continue.

2. Enjoliveur selon la revendication 1, **caractérisé en ce que** la jonction des profilés partiels (19, 20) est située du côté opposé par rapport à l'ouverture (32) de l'enjoliveur.

3. Enjoliveur selon une des revendications précédentes, **caractérisé en ce que** l'unité intérieure (33) comprend un élément lumineux et/ou un élément de décor.

4. Enjoliveur selon une des revendications précédentes, **caractérisé en ce que** l'unité intérieure (33) comprend un ou plusieurs éléments capteurs.

5. Enjoliveur selon une des revendications précédentes, **caractérisé en ce que** l'unité intérieure (33) comprend un boîtier (34).

6. Enjoliveur selon une des revendications précédentes, **caractérisé en ce que** l'unité intérieure (33) comprend un élément extérieur (37) avec une zone de visualisation (42) occupant l'ouverture (32) entière.

7. Enjoliveur selon une des revendications précédentes, **caractérisé par** un capuchon d'extrémité (50) lié à un ou aux deux des profilés partiels (19, 20) et comportant une languette (51) s'étendant jusque dans l'ouverture (32).

8. Enjoliveur selon une des revendications précédentes, **caractérisé en ce que** l'un ou les deux des profilés partiels (19, 20) comportent une extrémité (53) coudée.

9. Enjoliveur selon une des revendications précédentes, **caractérisé en ce qu'**un profilé porteur comprend une ouverture d'écoulement d'eau.
